# EUROPEAN PATENT SPECIFICATION

(11) **EP 4 296 785 B1**
(45) Date of publication and mention of the grant of the patent: **28.10.2026**
(21) Application number: 22756099.2
(22) Date of filing: 10.02.2022
(51) Int. Cl.: G03G 15/00, H04N 1/00, B41J 29/42, G06F 3/0481, G06F 3/0488, G06F 3/0483

(54) **INFORMATION PROCESSING DEVICE AND PROGRAM**
INFORMATIONSVERARBEITUNGSVORRICHTUNG UND -PROGRAMM
DISPOSITIF ET PROGRAMME DE TRAITEMENT D'INFORMATIONS

(30) Priority: 18.02.2021 JP 2021024680
(43) Date of publication of application: 27.12.2023
(73) Proprietor: FUJIFILM Corporation, Tokyo 106-8620 (JP)
(72) Inventor: MASUKO, Ryosuke, Yokohama-shi, Kanagawa 220-0012 (JP)
(74) Representative: Meissner Bolte Partnerschaft mbB
(86) International application number: PCT/JP2022/005437
(87) International publication number: WO 2022/176779

(56) References cited:
- WO-A1-2016/147576
- WO-A2-2007/017805
- JP-A- 2011 039 874
- JP-A- 2014 529 212
- JP-A- 2020 057 041
- JP-A- H1 124 739
- US-A1- 2006 005 142
- US-A1- 2006 190 831
- US-A1- 2011 107 257
- US-A1- 2019 332 228
- US-B2- 9 021 375

## Description

### Technical Field

The present disclosure relates to an information processing device and a program.

### Background Art

Japanese Patent Application Laid-Open (JP-A) No. 2006-107301 discloses an extension control device that can always display and operate a keyboard display button without changing the size, display method, or the like of other data such as a displayed window or text, or changing the position.

JP-A No. 2011-188105 discloses an image forming apparatus capable of displaying a preview in parallel with reading processing and capable of notifying an error during the preview display.

JP-A No. 2015-132931 discloses an information processing device capable of displaying input information on a screen on which the information is to be displayed among a plurality of screens provided from an application. Further prior art discussing the preamble of claims 1 and 7 is seen in US 2011/107257 and US 2017/352331.

### SUMMARY OF INVENTION

### Technical Problem

In recent information processing devices, since an operation screen is configured by a touch panel, for example, a second screen such as a setting screen is displayed in superposition with a first screen such as a main menu screen. In the case of using such a display method, in a case in which an event that changes display content of the first screen occurs, the change in the display content occurring in the first screen is blocked by the second screen, and there is a possibility that the user does not notice the occurrence of such an event.

An object of the present disclosure is to provide an information processing device and a program that enable a user to grasp occurrence of an event that changes the display content of the first screen even when the second screen is superimposed and displayed on the first screen.

### Solution to Problem

According to the invention as described in claim 1, which is described in the first and fifth aspects of the disclosure below, as the first aspect of the disclosure, there is provided an image forming apparatus including: a processor, in which the processor configured to cause display of a second screen, which is different from a first screen displayed on an operation screen, superimposed on at least a part of the first screen as a result of accepting an operation of a user, and change a display mode of the second screen such that a change in display content occurring on the first screen becomes visible in a case in which display content of the first screen changes.

According to a second aspect of the disclosure, in the image forming apparatus according to the first aspect, the processor is configured to cause display of the second screen so as to cover the first screen with the second screen by gradually enlarging a display area of the second screen, as a result of accepting the operation of the user.

According to a third aspect of the disclosure, in the image forming apparatus according to the second aspect, the processor is configured to cause display of the second screen so as to cover the first screen with the second screen by gradually enlarging the display area of the second screen, as a result of accepting a swipe operation of the user.

According to a fourth aspect of the disclosure, in the image forming apparatus according to any one of the first to third aspects, the processor is configured to change the display mode of the second screen by gradually reducing the display area of the second screen in a case in which the display content of the first screen changes.

According to a fifth aspect of the disclosure, in the image forming apparatus according to any one of the first to fourth aspects, the processor is configured to change the display mode of the second screen such that a change in display content occurring on the first screen becomes visible in a case in which an operation input on the second screen is no longer accepted due to occurrence of the event.

According to a sixth aspect of the disclosure, in the image forming apparatus according to the fifth aspect, the processor is configured not to change a display mode of the second screen in a case in which an operation input on the second screen can be received even when the event occurs.

A program according to the invention is seen in claim 6 and is defined by the combination of the teachings above in the fifth aspect with the following seventh aspect of the disclosure, wherein there is provided a program executable by a computer to perform processing comprising: causing display of a second screen, which is different from a first screen displayed on an operation screen, superimposed on at least a part of the first screen as a result of accepting an operation of a user, and changing a display mode of the second screen such that a change in display content occurring on the first screen becomes visible in a case in which display content of the first screen changes.

According to the image forming apparatus of the first aspect of the disclosure, even when the second screen is displayed in a superimposed manner on the first screen, the user can grasp the occurrence of the event that changes the display content of the first screen.

According to the image forming apparatus of the second aspect of the disclosure, the user can visually grasp that the second screen is displayed in a superimposed manner on the first screen.

According to the image forming apparatus of the third aspect of the disclosure, the user can visually grasp that the second screen is displayed in a superimposed manner on the first screen.

According to the image forming apparatus of the fourth aspect of the disclosure, the user can visually grasp that the second screen displayed in a superimposed manner on the first screen is shifted from the top of the first screen.

According to the image forming apparatus of the fifth aspect of the disclosure, it is possible to prevent occurrence of a situation in which the second screen disappears when the user is performing an operation input to the second screen.

According to the image forming apparatus of the sixth aspect of the disclosure, it is possible to prevent occurrence of a situation in which the second screen disappears when the user is performing an operation input to the second screen.

According to the program of the seventh aspect of the disclosure, even when the second screen is displayed in a superimposed manner on the first screen, the user can grasp the occurrence of an event that changes the display content of the first screen.

### BRIEF DESCRIPTION OF DRAWINGS

Fig. 1 shows a diagram illustrating a system configuration of an image forming system according to a first embodiment of the disclosure.
Fig. 2 shows a block diagram illustrating a hardware configuration of an image forming apparatus according to the first embodiment of the disclosure.
Fig. 3 shows a block diagram illustrating a functional configuration of the image forming apparatus according to the first embodiment of the disclosure.
Fig. 4 is a display example of a home screen display state which is an example of an operation screen displayed on an operation panel.
Fig. 5 is a diagram illustrating a hierarchical structure of an operation screen in a home screen display state.
Fig. 6 is a diagram for explaining switching from a home screen display state to a setting screen display state by a swipe operation.
Fig. 7 is a display example of the setting screen display state which is an example of the operation screen displayed on the operation panel.
Fig. 8 is a diagram illustrating the hierarchical structure of the operation screen in the setting screen display state.
Fig. 9 is a display example of event information displayed on a home screen.
Fig. 10 is a diagram for explaining switching from the setting screen display state to the home screen display state.
Fig. 11 is a flowchart for explaining the operation of the image forming apparatus according to the first embodiment of the disclosure.
Fig. 12 is a flowchart for explaining the operation of the image forming apparatus according to the second embodiment of the disclosure.

### DESCRIPTION OF EMBODIMENTS

### <First Embodiment>

Hereinafter, exemplary embodiments for carrying out the technology of the disclosure will be described in detail with reference to the drawings.

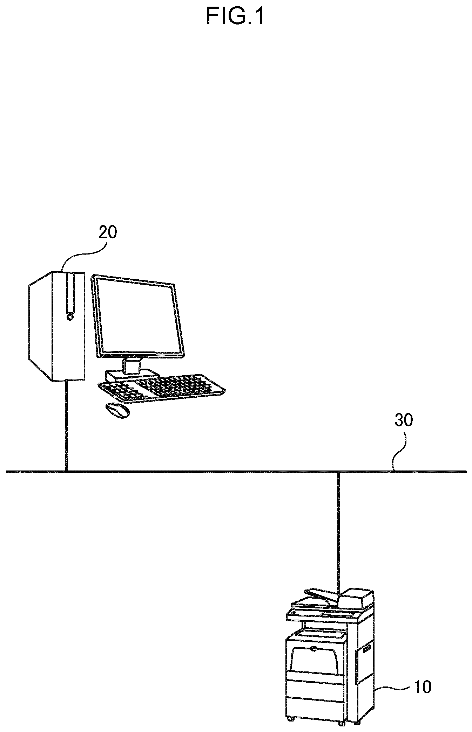

Fig. 1 is a diagram illustrating a system configuration of an image forming system according to a first embodiment; As illustrated in Fig. 1, the image forming system of the present embodiment includes an image forming apparatus 10 and a terminal device 20 connected to each other by a network 30. The terminal device 20 generates print data and transmits the generated print data to the image forming apparatus 10 via the network 30. The image forming apparatus 10 receives print data transmitted from the terminal device 20 and outputs an image corresponding to the print data on a sheet. The image forming apparatus 10 is a so-called multi-function machine having a plurality of functions such as a printing function, a scanning function, a copying function, and a facsimile function. The image forming apparatus 10 is an example of an information processing device in the technology of the disclosure.

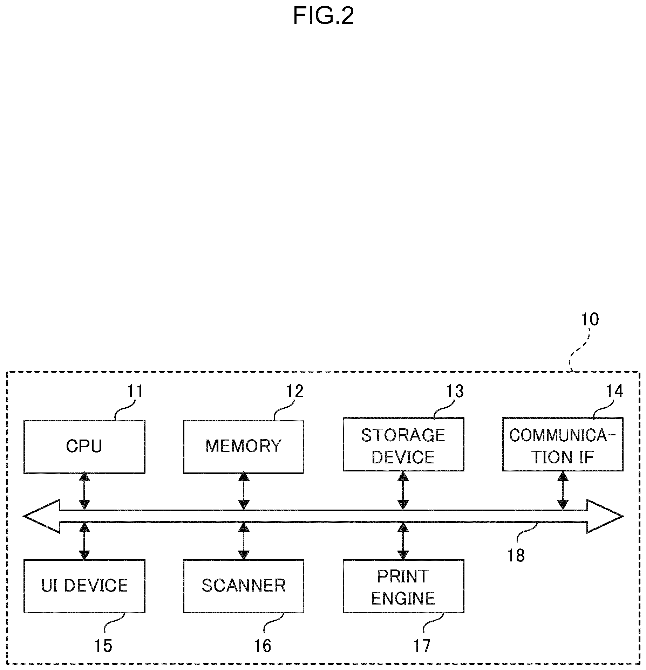

Next, a hardware configuration of the image forming apparatus 10 in the image forming system of the present embodiment is illustrated in Fig. 2.

As illustrated in Fig. 2, the image forming apparatus 10 includes a central processing unit (CPU) 11, a memory 12, a storage device 13 such as a hard disk drive, a communication interface (abbreviated as IF) 14 that transmits and receives data to and from an external device or the like via the network 30, a user interface (abbreviated as UI) device 15 including a touch panel or a liquid crystal display and a keyboard, a scanner 16, and a print engine 17. These components are connected to each other via a control bus 18.

The print engine 17 prints an image on a recording medium such as printing paper through processes such as charging, exposure, development, transfer, and fixing.

The CPU 11 is a processor that executes predetermined processing based on a control program stored in the memory 12 or the storage device 13 to control the operation of the image forming apparatus 10. In the present embodiment, the CPU 11 is described as reading and executing a control program stored in the memory 12 or the storage device 13, but the program may be stored in a storage medium such as a compact disc read only memory (CD-ROM) and provided to the CPU 11.

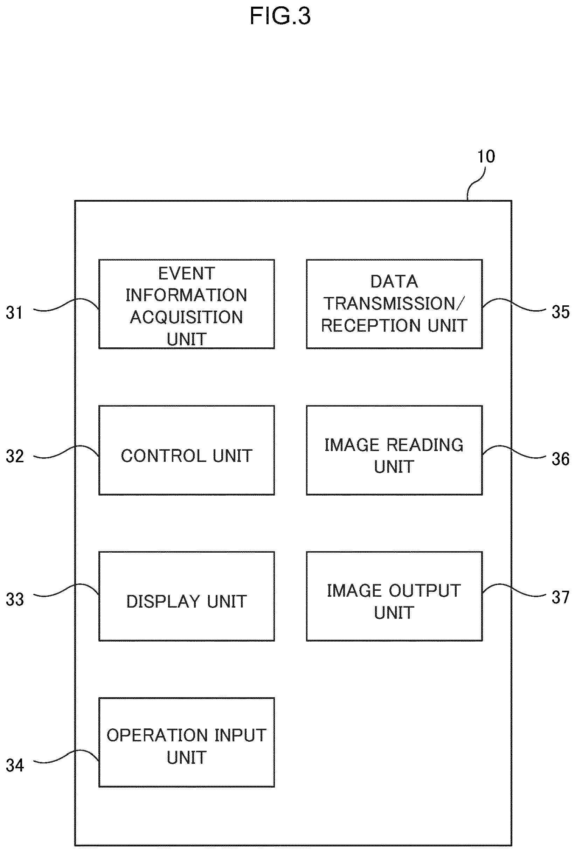

Fig. 3 is a block diagram illustrating a functional configuration of the image forming apparatus 10 realized by executing the control program.

As illustrated in Fig. 3, the image forming apparatus 10 of the present embodiment includes an event information acquisition unit 31, a control unit 32, a display unit 33, an operation input unit 34, a data transmission/reception unit 35, an image reading unit 36, and an image output unit 37.

The display unit 33 is controlled by the control unit 32 and displays various types of information to the user. The operation input unit 34 inputs various operation information performed by the user. The data transmission/reception unit 35 transmits and receives data to and from an external device such as the terminal device 20. The image reading unit 36 reads a document image from a set document under the control of the control unit 32. The image output unit 37 outputs an image on a recording medium such as printing paper under the control of the control unit 32.

The control unit 32 controls the overall operation of the image forming apparatus 10, generates print data based on a print job received from the terminal device 20 via the data transmission/reception unit 35, and performs control to output the generated print data from the image output unit 37 and control to read a document image by the image reading unit 36, and the like.

The event information acquisition unit 31 acquires event information that has occurred in the image forming apparatus 10. Here, the event information is information on some event related to the image forming apparatus 10, and includes, for example, information on a plurality of systems such as information on an abnormality relationship, information on an external operation relationship, and information on a login relationship.

Examples of the information on the abnormality relationship include information indicating a failure of the image forming apparatus 10, information indicating that a door of a housing of the image forming apparatus 10 is opened, and information indicating that an executing job has failed.

Examples of the information on the external operation relationship include information indicating that the setting of the image forming apparatus 10 has been changed from the terminal device 20, information indicating that software is being installed in the image forming apparatus 10, and the like.

Examples of the information on the login relationship include information indicating that a card for performing user authentication has been detected in a card reader provided in the image forming apparatus 10, information indicating that money has been deposited or returned in a billing apparatus provided in the image forming apparatus 10, and the like.

The control unit 32 displays a home screen and a setting screen different from the home screen as operation screens on an operation panel provided in the image forming apparatus 10.

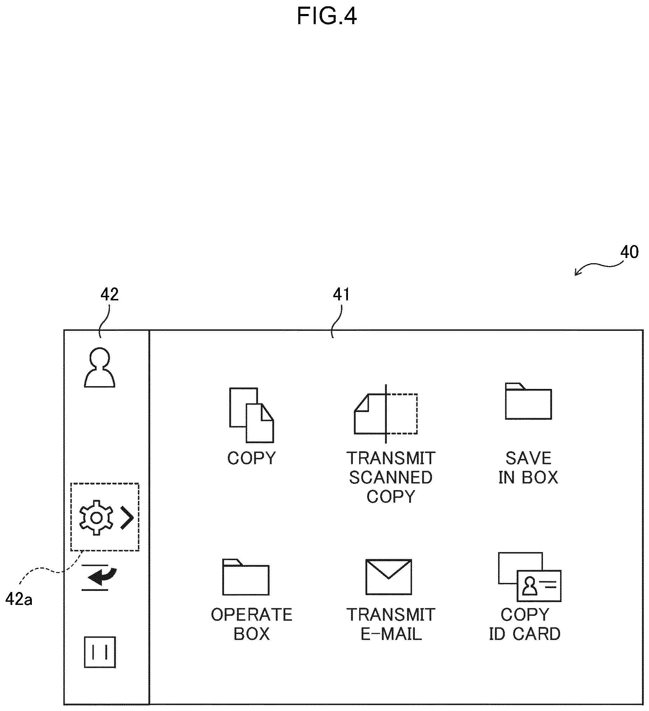

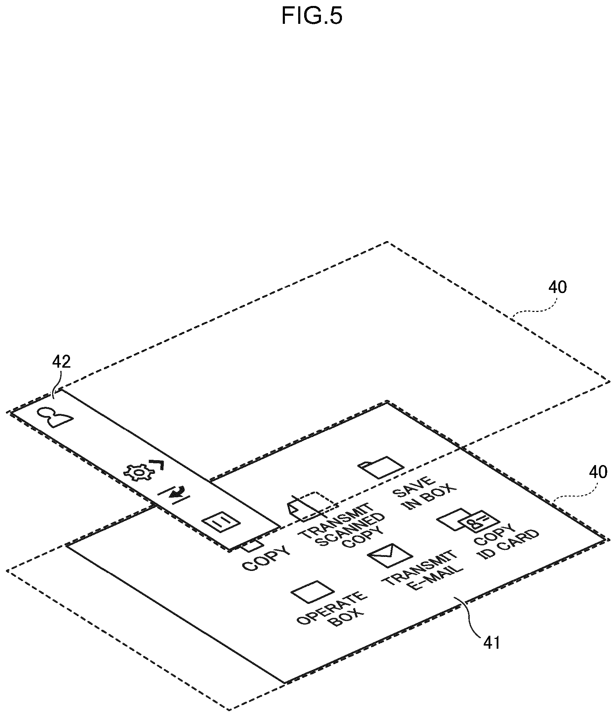

Fig. 4 is a display example of a home screen display state which is an example of the operation screen 40 displayed on the operation panel. Fig. 5 is a diagram illustrating a hierarchical structure of the operation screen 40 in the home screen display state.

As illustrated in Figs. 4 and 5 as an example, the operation screen 40 has a two-layer structure of a home screen 41 and a setting screen 42, and the setting screen 42 is displayed in a superimposed manner on the home screen 41.

The home screen 41 is provided with icons for inputting instructions for various jobs such as copy and transmission of a scanned copy.

In the home screen display state, the setting screen 42 is displayed in a reduced state that is displayed only in a partial region at the left end of the operation screen 40. The setting screen 42 in the reduced state is provided with an icon and the like commonly used in the home screen display state and the setting screen display state, in addition to an enlargement icon 42a for enlarging the setting screen 42.

In the home screen display state of the operation screen 40, the entire area of the home screen 41 is displayed, and the setting screen 42 in the reduced state is displayed on the left side of the home screen 41.

When the operation screen 40 is in the home screen display state, the control unit 32 accepts the operation of the user to display the setting screen 42 in a superimposed manner on at least a part of the home screen 41 displayed on the operation screen 40, thereby bringing the operation screen 40 into the setting screen display state.

As a way of changing the operation screen 40 to the setting screen display state, the setting screen 42 may be displayed in a superimposed manner so as to cover the home screen 41 with the setting screen 42 by gradually enlarging the display area of the setting screen by accepting the operation of the user, and the operation screen 40 may be set to the setting screen display state.

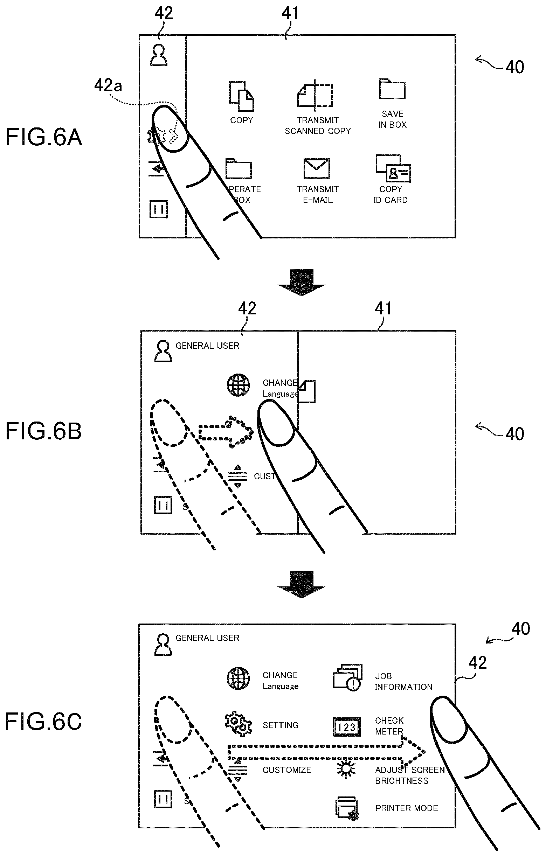

Here, the operation of the user for bringing the operation screen 40 into the setting screen display state may be, for example, a swipe operation of the user. Fig. 6 is a diagram for explaining switching from the home screen display state to the setting screen display state by the swipe operation.

When the operation screen 40 is in the home screen display state, as illustrated in Fig. 6A, the user touches the enlargement icon 42a on the setting screen 42, and performs a swipe operation toward the right side in a state of touching the enlargement icon 42a.

By performing such a swipe operation, as illustrated in Fig. 6B, the home screen 41 is gradually covered with the setting screen 42, and the display area of the setting screen 42 is gradually enlarged.

Finally, as illustrated in Fig. 6C, the state becomes the setting screen display state in which the setting screen 42 is displayed on the entire operation screen 40.

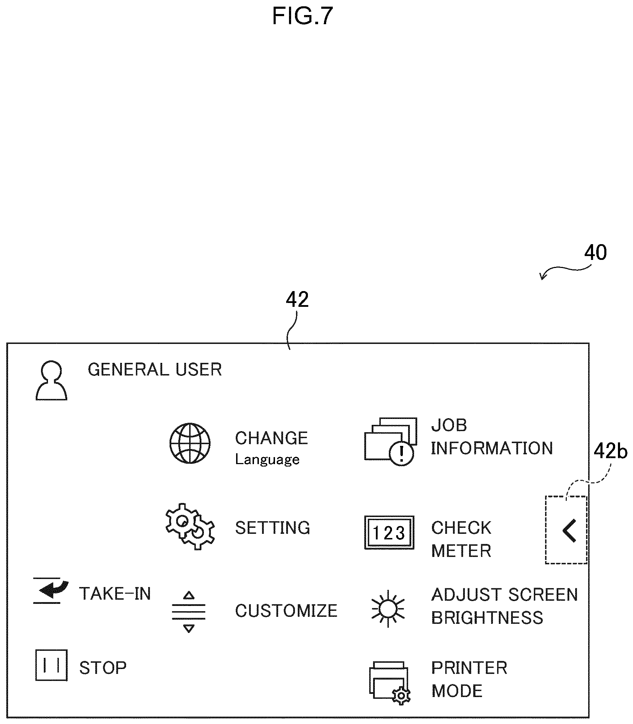

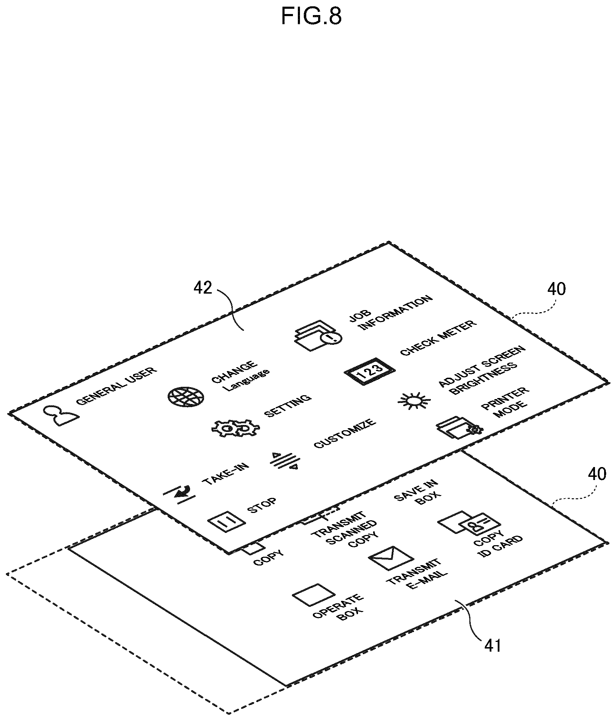

Fig. 7 is a display example of a setting screen display state which is an example of the operation screen 40 displayed on the operation panel. Fig. 8 is a diagram illustrating the hierarchical structure of the operation screen 40 in the setting screen display state.

As illustrated in Figs. 7 and 8, in the setting screen display state of the operation screen 40, since the entire area of the setting screen 42 is displayed in the entire area of the operation screen 40, the home screen 41 is shielded by the setting screen 42 and cannot be visually recognized by the user.

In the setting screen display state, the setting screen 42 is displayed in an enlarged state displayed in the entire area of the operation screen 40. The setting screen 42 in the enlarged state is provided with, in addition to a reduction icon 42b for reducing the setting screen 42, icons to be commonly used in the home screen display state and the setting screen display state, icons for performing various settings such as language switching and customization, and the like.

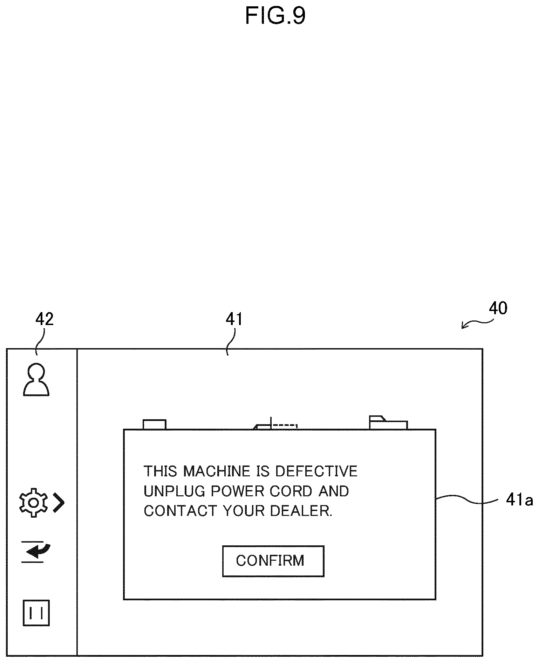

Fig. 9 is a display example of the event information displayed on the home screen 41. When the event information acquisition unit 31 acquires the event information, the control unit 32 displays an event display window 41a at the center of the home screen 41 and updates the display of the home screen 41.

However, when the operation screen 40 is in the setting screen display state, even when the display of the home screen 41 is updated, it cannot be visually recognized by the user. Therefore, when the operation screen 40 is in the setting screen display state and an event that changes the display content of the home screen 41 occurs, the control unit 32 changes the display mode of the setting screen 42 so that the change in the display content that has occurred on the home screen 41 becomes visible, thereby changing the operation screen 40 from the setting screen display state to the home screen display state, and displaying the event display window 41a on the home screen 41.

For example, in a case in which the event information acquisition unit 31 acquires information indicating a failure of the image forming apparatus 10 as the event information, the control unit 32 displays the event display window 41a indicating a failure of the image forming apparatus 10 at the center of the home screen 41 and updates the display of the home screen 41 as illustrated in Fig. 9.

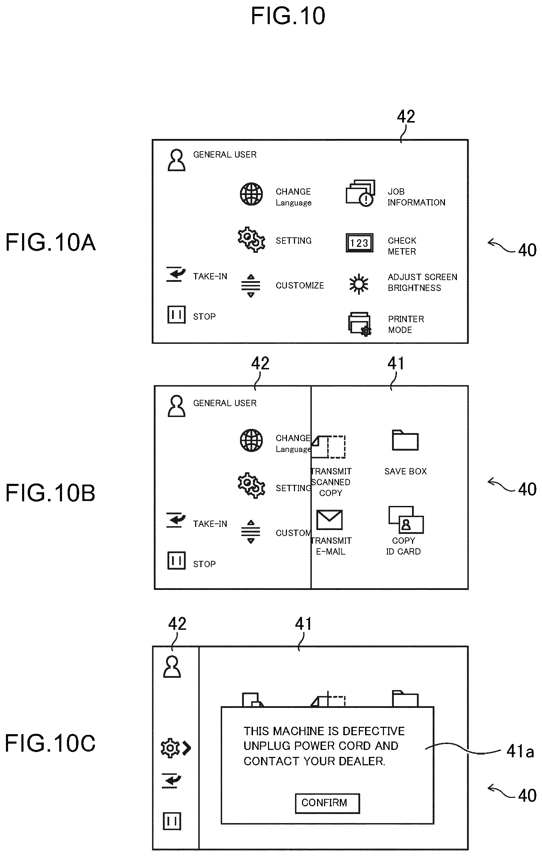

As a way of changing the display mode of the setting screen 42 so that the user can visually recognize the event display window 41a displayed on the home screen 41, for example, the setting screen 42 may be brought into a reduced state and the operation screen 40 may be brought into a home screen display state. Fig. 10 is a diagram for explaining switching from the setting screen display state to the home screen display state.

When detecting that an event that the display of the home screen 41 changes occurs in a state where the operation screen 40 is in the setting screen display state as illustrated in Fig. 10A, the control unit 32 gradually reduces the display area of the setting screen 42 as illustrated in Fig. 10B.

Then, finally, as illustrated in Fig. 10C, the control unit 32 brings the operation screen 40 into the home screen display state, displays the entire area of the home screen 41 on the operation screen 40, and allows the user to visually recognize the event display window 41a.

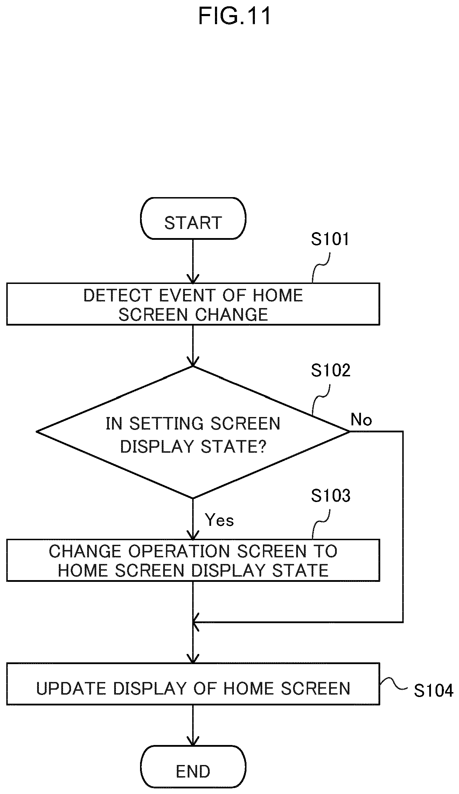

Next, the operation of the image forming apparatus 10 in the present embodiment will be described with reference to a flowchart of Fig. 11.

First, in Step S101, the control unit 32 detects occurrence of an event in which the display of the home screen 41 changes.

Then, in Step S102, the control unit 32 determines whether or not the operation screen 40 is in the setting screen display state.

In a case in which it is determined in Step S102 that the operation screen is not in the setting screen display state, that is, the determination in Step S102 is No, the control unit 32 updates the display of the home screen 41 so as to display the event display window 41a in Step S104.

In a case in which it is determined in Step S102 that the operation screen is in the setting screen display state, that is, the determination in Step S102 is Yes, the control unit 32 changes the operation screen 40 from the setting screen display state to the home screen display state in Step S103, and then updates the display of the home screen so as to display the event display window 41a in Step S104.

### <Second Embodiment>

In the first embodiment, in the case of an event in which the display of the home screen 41 changes in the setting screen display state, the state is always changed to the home screen display state, and the event display window 41a is displayed.

In the present embodiment, a mode will be described in which the setting screen display state is maintained in a case where an operation input on the setting screen 42 is possible even in a case in which an event occurs in which the display of the home screen 41 changes in the setting screen display state.

Note that a hardware configuration (see Figs. 1 to 3) of the image forming apparatus 10 according to the present embodiment is similar to that of the first embodiment, and thus description thereof is omitted. The operation screen 40 (see Figs. 4 and 8) according to the present embodiment is also similar to that of the first embodiment, and thus description thereof is omitted.

In the setting screen display state, when a failure occurs in the image forming apparatus 10, the setting of the image forming apparatus 10 is changed from the terminal device 20, or software is installed in the image forming apparatus 10, operation input on the setting screen 42 is hindered.

Therefore, when the event information acquisition unit 31 acquires, as the event information, information indicating failure of the image forming apparatus 10, information indicating that the setting of the image forming apparatus 10 has been changed from the terminal device 20, information indicating that the software is being installed on the image forming apparatus 10, or the like, that is, when the operation input on the setting screen 42 is no longer accepted, the control unit 32 changes the display mode of the setting screen 42 so that the change in the display content occurring on the home screen 41 can be visually recognized, thereby changing the operation screen 40 from the setting screen display state to the home screen display state, and displays the event display window 41a on the home screen 41.

Meanwhile, even in a case in which an event occurs in which the display of the home screen changes, in a case where an operation input on the setting screen is possible, there is no problem even in a state where the setting screen display state is maintained without changing the operation screen 40 to the home screen display state.

Therefore, in a case in which the event information acquisition unit 31 acquires information other than the above as the event information, that is, when the operation input on the setting screen 42 can be received, the control unit 32 maintains the setting screen display state without changing the display mode of the setting screen 42.

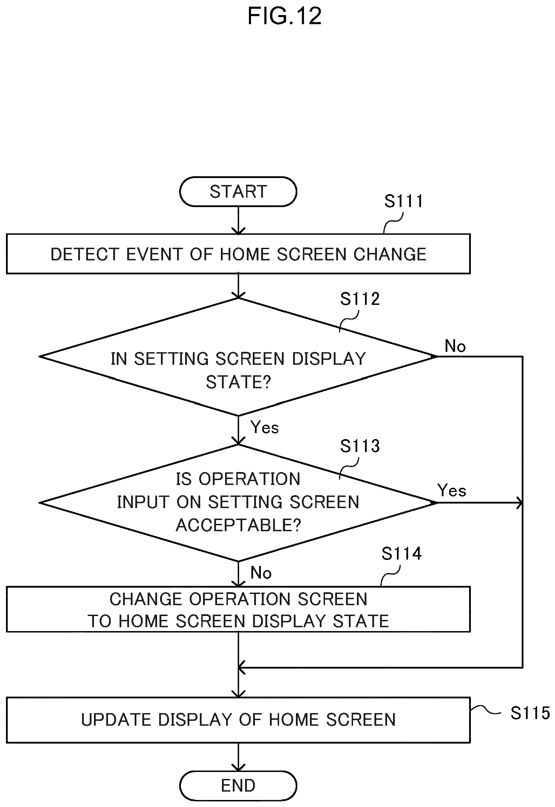

The operation of the image forming apparatus 10 in the present embodiment will be described with reference to a flowchart of Fig. 12.

First, in Step S111, the control unit 32 detects occurrence of an event in which the display of the home screen 41 changes.

Then, in Step S112, the control unit 32 determines whether or not the operation screen 40 is in the setting screen display state.

In a case in which it is determined in Step S112 that the operation screen is not in the setting screen display state, that is, the determination in Step S112 is No, the control unit 32 updates the display of the home screen so as to display the event display window 41a in Step S115.

In a case in which it is determined in Step S112 that the operation screen is in the setting screen display state, that is, the determination in Step S112 is Yes, the control unit 32 determines in Step S113 whether or not an operation input on the setting screen 42 is possible.

In a case in which it is determined in Step S113 that the operation input on the setting screen 42 is possible, that is, the determination in Step S113 is Yes, the control unit 32 updates the display of the home screen 41 so as to display the event display window 41a while maintaining the setting screen display state in Step S115.

In a case in which it is determined in Step S113 that the operation input on the setting screen 42 is impossible, that is, the determination in Step S113 is No, the control unit 32 changes the operation screen 40 from the setting screen display state to the home screen display state in Step S114, and then updates the display of the home screen so as to display the event display window 41a in Step S115.

### <Modification>

In each of the above embodiments, a processor refers to a processor in a broad sense, and includes a general-purpose processor (for example, CPU: Central Processing Unit, etc.) or a dedicated processor (for example, GPU: Graphics Processing Unit, ASIC: Application Specific Integrated Circuit, FPGA: Field Programmable Gate Array, Programmable Logic Device, and the like).

In addition, the operation of the processor in each of the embodiments may be performed not only by one processor but also by a plurality of processors existing at physically separated positions in cooperation. In addition, the order of each operation of the processor is not limited to the order described in each of the embodiments and may be changed, as appropriate.

Furthermore, in the above-described embodiment, a case where the technology of the disclosure is applied to the image forming apparatus that forms the image on the recording medium has been described. However, the technology of the disclosure is not limited thereto, and the technology of the disclosure can be similarly applied to an information processing device such as a personal computer or a mobile terminal device that stores processing execution information for executing preset processing and executes processing using the stored processing execution information.

## Claims

1. An image forming apparatus (10) comprising:
a processor (11) configured to:
cause display of a second screen (42), which is different from a first screen (41) displayed on an operation screen (40), superimposed on at least a part of the first screen as a result of accepting an operation of a user, and
change a display mode of the second screen such that a change in display content occurring on the first screen becomes visible in a case in which display content of the first screen changes,
**characterized in that**:
the processor is configured to change the display mode of the second screen such that a change in display content occurring on the first screen becomes visible in a case in which an operation input on the second screen is no longer accepted due to occurrence of the change of display of the content of the first screen.

2. The image forming apparatus according to claim 1, wherein the processor is configured to cause display of the second screen so as to cover the first screen with the second screen by gradually enlarging a display area of the second screen, as a result of accepting the operation of the user.

3. The image forming apparatus according to claim 2, wherein the processor is configured to cause display of the second screen so as to cover the first screen with the second screen by gradually enlarging the display area of the second screen, as a result of accepting a swipe operation of the user.

4. The image forming apparatus according to any one of claims 1 to 3, wherein the processor is configured to change the display mode of the second screen by gradually reducing the display area of the second screen in a case in which the display content of the first screen changes.

5. The image forming apparatus according to any one of claims 1 to 4, wherein the processor is configured not to change a display mode of the second screen in a case in which an operation input on the second screen can be received even when the change of display of the content of the first screen occurs.

6. The image forming apparatus of any of claims 1-5, wherein the first screen is a home screen and the second screen is a setting screen.

7. A program comprising instructions that, when executed by a processor (11) of an image forming apparatus (10), cause the image forming apparatus to perform processing comprising:
causing display of a second screen (42), which is different from a first screen (41) displayed on an operation screen (40), superimposed on at least a part of the first screen as a result of accepting an operation of a user, and
changing a display mode of the second screen such that a change in display content occurring on the first screen becomes visible in a case in which display content of the first screen changes,
**characterized in that**:
the program causes the processor to change the display mode of the second screen such that a change in display content occurring on the first screen becomes visible in a case in which an operation input on the second screen is no longer accepted due to occurrence of the change of display of the content of the first screen.

8. The program of claim 7, wherein the first screen is a home screen and the second screen is a setting screen.

## Patentansprüche

1. Bilderzeugungseinrichtung (10), umfassend:
einen Prozessor (11), ausgelegt zum:
Veranlassen einer Anzeige eines zweiten Bildschirms (42), der sich von einem auf einem Bedienbildschirm (40) angezeigten ersten Bildschirm (41) unterscheidet und infolge des Entgegennehmens einer Bedienung eines Benutzers über wenigstens einen Teil des ersten Bildschirms gelegt wird; und
Verändern eines Anzeigemodus des zweiten Bildschirms derart, dass eine auf dem ersten Bildschirm auftretende Veränderung des Anzeigeinhalts dann sichtbar wird, wenn sich der Anzeigeinhalt des ersten Bildschirms ändert,
**dadurch gekennzeichnet, dass**:
der Prozessor ausgelegt ist, um den Anzeigemodus des zweiten Bildschirms derart zu ändern, dass eine auf dem ersten Bildschirm auftretende Veränderung des Anzeigeinhalts dann sichtbar wird, wenn eine auf dem zweiten Bildschirm eingegebene Bedienung aufgrund der Änderung der Anzeige des Inhalts des ersten Bildschirms nicht mehr entgegengenommen wird.

2. Bilderzeugungseinrichtung nach Anspruch 1, wobei der Prozessor ausgelegt ist, um eine Anzeige des zweiten Bildschirms zu veranlassen, um so den ersten Bildschirm durch den zweiten Bildschirm zu überdecken, indem ein Anzeigebereich des zweiten Bildschirms infolge des Entgegennehmens der Bedienung eines Benutzers nach und nach vergrößert wird.

3. Bilderzeugungseinrichtung nach Anspruch 2, wobei der Prozessor ausgelegt ist, um eine Anzeige des zweiten Bildschirms zu veranlassen, um so den ersten Bildschirm durch den zweiten Bildschirm zu überdecken, indem ein Anzeigebereich des zweiten Bildschirms infolge des Entgegennehmens einer Wischbedienung eines Benutzers nach und nach vergrößert wird.

4. Bilderzeugungseinrichtung nach einem der Ansprüche 1 bis 3, wobei der Prozessor ausgelegt ist, um den Anzeigemodus des zweiten Bildschirms zu ändern, indem der Anzeigebereich des zweiten Bildschirms nach und nach dann verringert wird, wenn sich der Anzeigeinhalt des ersten Bildschirms ändert.

5. Bilderzeugungseinrichtung nach einem der Ansprüche 1 bis 4, wobei der Prozessor ausgelegt ist, um einen Anzeigemodus des zweiten Bildschirms dann zu ändern, wenn eine Bedienungseingabe am zweiten Bildschirm erhalten wird, selbst wenn eine Veränderung der Anzeige des Inhalts des ersten Bildschirms auftritt.

6. Bilderzeugungseinrichtung nach einem der Ansprüche 1 bis 5, wobei der erste Bildschirm ein Startbildschirm und der zweite Bildschirm ein Einstellungsbildschirm ist.

7. Programm, umfassend Anweisungen, die bei Ausführung durch einen Prozessor (11) einer Bilderzeugungseinrichtung (10) die Bilderzeugungseinrichtung veranlassen, eine Verarbeitung durchzuführen, umfassend:
Veranlassen einer Anzeige eines zweiten Bildschirms (42), der sich von einem auf einem Bedienbildschirm (40) angezeigten ersten Bildschirm (41) unterscheidet und infolge des Entgegennehmens einer Bedienung eines Benutzers über wenigstens einen Teil des ersten Bildschirms gelegt wird; und
Verändern eines Anzeigemodus des zweiten Bildschirms derart, dass eine auf dem ersten Bildschirm auftretende Veränderung des Anzeigeinhalts dann sichtbar wird, wenn sich der Anzeigeinhalt des ersten Bildschirms ändert,
**dadurch gekennzeichnet, dass**:
das Programm den Prozessor veranlasst, den Anzeigemodus des zweiten Bildschirms derart zu ändern, dass eine auf dem ersten Bildschirm auftretende Veränderung des Anzeigeinhalts dann sichtbar wird, wenn eine auf dem zweiten Bildschirm eingegebene Bedienung aufgrund des Auftretens der Änderung der Anzeige des Inhalts des ersten Bildschirms nicht mehr entgegengenommen wird.

8. Programm nach Anspruch 7, wobei der erste Bildschirm ein Startbildschirm und der zweite Bildschirm ein Einstellungsbildschirm ist.

## Revendications

1. Appareil de formation d'images (10) comprenant :
un processeur (11) configuré pour :
provoquer l'affichage d'un deuxième écran (42), qui est différent d'un premier écran (41) affiché sur un écran d'opération (40), superposé à au moins une partie du premier écran comme résultat de l'acceptation d'une opération effectuée par un utilisateur, et
changer un mode d'affichage du deuxième écran de telle sorte qu'un changement de contenu d'affichage se produisant sur le premier écran devienne visible dans le cas où le contenu d'affichage du premier écran change,
**caractérisé en ce que** :
le processeur est configuré pour changer le mode d'affichage du deuxième écran de telle sorte qu'un changement de contenu d'affichage se produisant sur le premier écran devienne visible dans le cas où une opération entrée sur le deuxième écran n'est plus acceptée en raison d'un changement d'affichage du contenu du premier écran.

2. Appareil de formation d'images selon la revendication 1, dans lequel le processeur est configuré pour provoquer l'affichage du deuxième écran de manière à recouvrir le premier écran par le deuxième écran en agrandissant progressivement une zone d'affichage du deuxième écran comme résultat de l'acceptation de l'opération de l'utilisateur.

3. Appareil de formation d'images selon la revendication 2, dans lequel le processeur est configuré pour provoquer l'affichage du deuxième écran de manière à recouvrir le premier écran par le deuxième écran en agrandissant progressivement la zone d'affichage du deuxième écran comme résultat de l'acceptation d'une opération de balayage de l'utilisateur.

4. Appareil de formation d'images selon l'une quelconque des revendications 1 à 3, dans lequel le processeur est configuré pour changer le mode d'affichage du deuxième écran en réduisant progressivement la zone d'affichage du deuxième écran dans le cas où le contenu affiché sur le premier écran change.

5. Appareil de formation d'images selon l'une quelconque des revendications 1 à 4, dans lequel le processeur est configuré pour ne pas changer le mode d'affichage du deuxième écran dans le cas où une opération entrée sur le deuxième écran peut être reçue même lorsqu'un changement d'affichage du contenu du premier écran se produit.

6. Appareil de formation d'images selon l'une quelconque des revendications 1 à 5, dans lequel le premier écran est un écran d'accueil et le deuxième écran est un écran de réglages.

7. Programme comprenant des instructions qui, lorsqu'elles sont exécutées par un processeur (11) d'un appareil de formation d'images (10), amènent l'appareil de formation d'images à effectuer un traitement consistant à :
provoquer l'affichage d'un deuxième écran (42), qui est différent d'un premier écran (41) affiché sur un écran d'opération (40), superposé à au moins une partie du premier écran comme résultat de l'acceptation d'une opération effectuée par un utilisateur, et
changer un mode d'affichage du deuxième écran de telle sorte qu'un changement de contenu d'affichage se produisant sur le premier écran devienne visible dans le cas où le contenu d'affichage du premier écran change,
**caractérisé en ce que** :
le programme amène le processeur à changer le mode d'affichage du deuxième écran de telle sorte qu'un changement de contenu d'affichage se produisant sur le premier écran devienne visible dans le cas où une opération entrée sur le deuxième écran n'est plus acceptée en raison d'un changement d'affichage du contenu du premier écran.

8. Programme selon la revendication 7, dans lequel le premier écran est un écran d'accueil et le deuxième écran est un écran de réglages.
